# EUROPEAN PATENT SPECIFICATION

(11) **EP 2 070 807 B1**
(45) Date of publication and mention of the grant of the patent: **03.08.2011**
(21) Application number: 08020864.8
(22) Date of filing: 02.12.2008
(51) Int. Cl.: B62D 25/08

(54) **Structural member**
Strukturelement
Elément structurel

(30) Priority: 10.12.2007 NO 20076374
(43) Date of publication of application: 17.06.2009
(73) Proprietor: Benteler Automobiltechnik GmbH, 33102 Paderborn (DE)
(72) Inventor: Marcussen, Povl Erik, 6270 Tønder (DK)
(74) Representative: Griepenstroh, Jörg

(56) References cited:
- DE-A1-102004 007 051
- DE-A1-102006 041 110
- DE-A1-102007 010 821
- JP-A- 8 243 667
- US-A1- 2003 080 589

## Description

The present invention relates to a strut tower brace for a vehicle. This strut tower brace is made of the basis of an extruded section that is processed to its final shape. Preferably the extruded section is made out of aluminium or an aluminium alloy.

JP2267083 relates to stiffening a strut tower in a vehicle towards the inner side or to the rear side by mounting a brace between the tower and a dash upper cross panel. The purpose of this kind of stiffening is related to crash behaviour, where the stiffening member is acting between each individual tower and their fixation in the upper cross panel.

Further, there are commercial products available for aftermarket upgrade of suspension systems in cars, where strut bars can be mounted to interconnect the strut towers in the car. There are also braces that triangulate the strut towers with the firewall of the vehicle to increase the torsion stiffness of the vehicle. These components are normally made out of steel parts such as tubes that are welded together.

The prior art solutions are relatively expensive to produce due to several assembly operations. Welding operations include that the parts to be joined must be properly prepared and aligned before welding can start. Further, after the parts have been welded together, the parts must undergo surface finishing steps such as grinding, priming, painting etc.

In accordance with the present invention at least some of the above shortcomings can be avoided.

In accordance with the present invention the extruded section may comprise at least one hollow chamber and a flange part, formed in a manner that gives a high stiffness in both vertical direction, as in diagonal direction. This can be achieved at a low weight, because the material is in place where it is needed for stiffening. The vertical stiffness is obtained due to the at least one hollow chamber, the diagonal stiffness is obtained through the combination of hollow chamber, and blank or flange part as sheer stiffener. The combination of an extruded hollow chamber and flange part gives a one-piece solution, which can be processed in one process line. The member can be made out of one extruded section or profile in an in-line stamping-, bending- forming- and deep-drawing process. This means that assembling operations can be avoided in the manufacture of the product, which gives a cost efficient solution.

These and further advantages can be achieved by the invention as claimed in the accompanying claims.

The present invention shall be further described by Figures and examples where;
- Fig. 1: discloses a cross-sectional view of an extruded section with a circular cross- section,
- Fig. 2: discloses a cross-sectional view of an extruded section with a boxed cross- section,
- Fig. 3: discloses the cross-sectional view of the extruded section as shown in Fig. 2,
- Fig. 4: discloses in perspective a strut tower brace in accordance with the present invention.

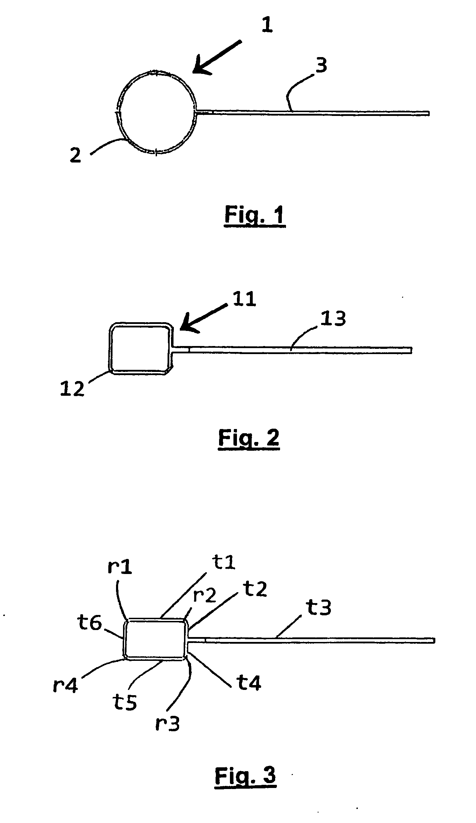

Fig. 1 discloses an extruded section 1 with a circular cross-section 2. In addition a flange part 3 is integrated with the circular hollow section. In Fig. 2 there is disclosed an extruded section 11 with a boxed cross-section 12, and an integrated flange part 13.

As indicated in Fig. 3, the different walls in the profile may have different thicknesses t1, t2, t3, t4, t5, t6 and radii in the corners of the hollow section r1, r2, r3, r4. The faces of the hollow section may be convex and/or concave (not shown).

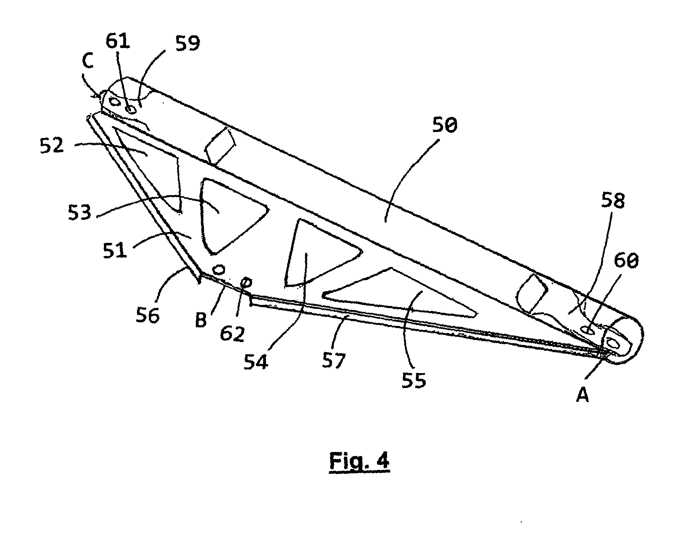

Local stiffness improvements are obtained to the brace by applying local deformations of the surfaces. See Fig. 4.

The brace is located in the front end of the vehicle, between strut tower and firewall. It consists of at least 3 connection points (A, B, C), where point A and C are the connection points to the strut towers, and point B is to the firewall. Alternatively, point B can be attached to the frame for a windscreen in the vehicle. At point B the brace may have fixation holes 62 for fixation by bolts or the similar to a corresponding structural part in the vehicle.

The brace consists of at least one hollow section 50 and one flange part 51. Both parts may be formed, in order to improve local stiffness. In this embodiment blank flange 51 is provided with imprints 52, 53, 54, 55 that enhance the stiffness properties of the blank part. Similarly, the edges 56, 57 of the blank can be folded, for instance approximately perpendicular to the plane of the flange part, to further improve stiffness. Double folding of the edges may also be an alternative to enhance stiffness.

The cross-section of the hollow section can vary over its lengthwise extension and it can further be formed or processed to improve stiffness in the area of its connection points A and C. For instance, the ends can be processed to represent connecting flanges 58, 59 having mounting holes 60, 61 for fixation to appropriate structural components in the vehicle.

The brace contributes significant to an increased driving comfort of the car due to:

The combination of a hollow chamber and flange part gives a stiff triangular connection between strut towers, and firewall, where the hollow chamber stiffens the vertical displacements relative between the strut towers and the blank stiffens the displacements relative between both strut towers and the firewall.

The brace as so increases the eigenvalues globally and locally in the brace itself, and a significant increase in the dynamically stiffness at the connecting points.

It should be understood that the strut tower brace can be formed out of all types of extrudable materials appropriate for use as structural components. Any appropriate Al-alloys that comply with the required stiffness (E-module) requirements may be applied. Preferably, cheap alloys that can be processed without difficulties can be good alternatives.

## Claims

1. A vehicle strut tower brace, made from a stiffening member interconnecting strut towers and one upper part of the firewall or windscreen frame in said vehicle, **characterised in that** the stiffening member made out of one extruded section or profile.

2. A strut tower brace in accordance with claim 1,
**characterised in that**
the extruded section consists of at least one hollow section and one flange formed part.

3. A strut tower brace in accordance with claim 2,
**characterised in that**
the hollow section may be a circular cross-section

4. A strut tower brace in accordance with claim2,
**characterised in that**
the hollow section may be a boxed cross-section

5. A strut tower brace in accordance with claim 1,
**characterised in that**
the different walls in the section may have different thickness

6. A strut tower brace in accordance with claim 1,
**characterised in that**
It may be different radii at the corners of the section.

7. A strut tower brace in accordance with claim 2,
**characterised in that**
the faces of the hollow section or flange may be convex or concave.

8. A strut tower brace in accordance with claim 1,
**characterised in that**
the surfaces of the brace are deformed locally to improve the local stiffness of the member

9. A strut tower brace in accordance with claim 8,
**characterised in that**
the deformation consists of imprints.

10. A strut tower brace in accordance with claim 8,
**characterised in that**
the deformation consists of edge folding.

11. A strut tower brace in accordance with claim 8,
**characterised in that**
the brace is made out of aluminium or an aluminium alloy.

12. A strut tower brace in accordance with claim 2,
**characterised in that**
the combination of an extruded hollow chamber and flange gives a high stiffness in both vertical direction, as in diagonal direction.

## Patentansprüche

1. Fahrzeugfederbeindomstrebe, die aus einem Versteifungselement hergestellt ist, das Federbeindome mit einem oberen Teil der Stirnwand oder des Windschutzscheibenrahmens des Fahrzeugs verbindet, **dadurch gekennzeichnet, dass** das Versteifungselement aus einem Strangpressprofil hergestellt ist.

2. Federbeindomstrebe nach Anspruch 1, **dadurch gekennzeichnet, dass** das Strangpressprofil aus mindestens einem hohlen Abschnitt und einem Flanschformteil besteht.

3. Federbeindomstrebe nach Anspruch 2, **dadurch gekennzeichnet, dass** der hohle Abschnitt einen kreisförmigen Querschnitt haben kann.

4. Federbeindomstrebe nach Anspruch 2, **dadurch gekennzeichnet, dass** der hohle Abschnitt einen kastenförmigen Querschnitt haben kann.

5. Federbeindomstrebe nach Anspruch 1, **dadurch gekennzeichnet, dass** die verschiedenen Wände in dem Profil unterschiedlich dick sein können.

6. Federbeindomstrebe nach Anspruch 1, **dadurch gekennzeichnet, dass** an den Ecken des Profils unterschiedliche Radien vorliegen können.

7. Federbeindomstrebe nach Anspruch 2, **dadurch gekennzeichnet, dass** die Flächen des hohlen Abschnitts oder des Flanschs konvex oder konkav sein können.

8. Federbeindomstrebe nach Anspruch 1, **dadurch gekennzeichnet, dass** die Oberflächen der Strebe zur Verbesserung der örtlichen Steifheit des Elements örtlich deformiert sein können.

9. Federbeindomstrebe nach Anspruch 8, **dadurch gekennzeichnet, dass** die Deformierung aus Prägungen besteht.

10. Federbeindomstrebe nach Anspruch 8, **dadurch gekennzeichnet, dass** die Deformierung aus Abkantungen besteht.

11. Federbeindomstrebe nach Anspruch 8, **dadurch gekennzeichnet, dass** die Strebe aus Aluminium oder einer Aluminiumlegierung hergestellt ist.

12. Federbeindomstrebe nach Anspruch 2, **dadurch gekennzeichnet, dass** die Kombination aus einer stranggepressten hohlen Kammer und einem Flansch für hohe Steifheit sowohl in vertikaler als auch in diagonaler Richtung sorgt.

## Revendications

1. Entretoise pour tourelles d'amortisseurs de véhicule, constituée d'une pièce de rigidification (1) reliant mutuellement des tourelles d'amortisseurs et l'une des parties supérieures de l'encadrement de pare-feu ou de pare-brise, dans ledit véhicule,
**caractérisée par le fait que**
la pièce de rigidification se présente comme un unique tronçon ou profilé extrudé.

2. Entretoise pour tourelles d'amortisseurs, selon la revendication 1,
**caractérisée par le fait que**
le tronçon extrudé se présente comme au moins un unique tronçon creux et une unique partie configurée en une bride.

3. Entretoise pour tourelles d'amortisseurs, selon la revendication 2,
**caractérisée par le fait que**
le tronçon creux peut être de section transversale circulaire.

4. Entretoise pour tourelles d'amortisseurs, selon la revendication 2,
**caractérisée par le fait que**
le tronçon creux peut être de section transversale configurée en caisson.

5. Entretoise pour tourelles d'amortisseurs, selon la revendication 1,
**caractérisée par le fait que**
les différentes parois peuvent présenter des épaisseurs différentes dans le tronçon.

6. Entretoise pour tourelles d'amortisseurs, selon la revendication 1,
**caractérisée par le fait que**
les coins du tronçon peuvent présenter des rayons différents.

7. Entretoise pour tourelles d'amortisseurs, selon la revendication 2,
**caractérisée par le fait que**
les faces du tronçon creux, ou de la bride, peuvent être convexes ou concaves.

8. Entretoise pour tourelles d'amortisseurs, selon la revendication 1,
**caractérisée par le fait que**
les surfaces de ladite entretoise sont déformées localement, afin d'améliorer la rigidité localisée de la pièce.

9. Entretoise pour tourelles d'amortisseurs, selon la revendication 8,
**caractérisée par le fait que**
la déformation se présente comme des empreintes embouties.

10. Entretoise pour tourelles d'amortisseurs, selon la revendication 8,
**caractérisée par le fait que**
la déformation se présente comme une pliure des arêtes.

11. Entretoise pour tourelles d'amortisseurs, selon la revendication 8,
**caractérisée par le fait que**
ladite entretoise est fabriquée en aluminium, ou en un alliage d'aluminium.

12. Entretoise pour tourelles d'amortisseurs, selon la revendication 2,
**caractérisée par le fait que**
la combinaison d'un compartiment creux extrudé et d'une bride confère une rigidité élevée, tant dans la direction verticale que dans la direction diagonale.
